# EUROPÄISCHE PATENTSCHRIFT

(11) **EP 4 255 719 B1**
(45) Veröffentlichungstag und Bekanntmachung des Hinweises auf die Patenterteilung: **16.10.2024**
(21) Anmeldenummer: 21824325.1
(22) Anmeldetag: 30.11.2021
(51) Int. Cl.: B29C 65/08, B29C 65/00, B29K 701/12, B29L 31/48

(54) **GEGENELEMENT FÜR DIE ULTRASCHALLBEARBEITUNG**
COUNTERELEMENT FOR ULTRASONIC PROCESSING
CONTRE-ÉLÉMENT POUR TRAITEMENT ULTRASONIQUE

(30) Priorität: 07.12.2020 DE 102020132523
(43) Veröffentlichungstag der Anmeldung: 11.10.2023
(73) Patentinhaber: Herrmann Ultraschalltechnik GmbH & Co. KG, 76307 Karlsbad (DE)
(72) Erfinder: ROUSSEL-GARCIA, Raquel, 75180 Pforzheim (DE); BODE, Robin Alexander, 75180 Pforzheim (DE); ZINK, Timo, 76139 Karlsruhe (DE)
(74) Vertreter: WSL Patentanwälte Partnerschaft mbB
(86) Internationale Anmeldenummer: PCT/EP2021/083652
(87) Internationale Veröffentlichungsnummer: WO 2022/122487

(56) Entgegenhaltungen:
- EP-B1- 1 477 293
- EP-B1- 2 063 842
- EP-B1- 3 094 468
- EP-B1- 3 209 433
- WO-A1-2018/064340
- WO-A1-2022/097455
- DE-A1- 2 154 057
- US-A1- 2010 243 172

## Beschreibung

Die vorliegende Erfindung betrifft ein Gegenelement für die Ultraschallbearbeitung eines Materials, wie z.B. eine Sonotrode oder ein Amboss.

Gerade bei der Verbindung von Vliesstoffmaterialien kommt zunehmend Ultraschall zur Anwendung. Dabei werden zwei miteinander zu verbindende Vliesstoffabschnitte übereinander in einen Spalt zwischen einer Sonotrode und einem Amboss gebracht und die Sonotrode mit einer Ultraschallschwingung beaufschlagt. An den aufeinander liegenden Kontaktflächen kommt es aufgrund der durch die Ultraschallschwingung induzierten Reibung zu einer punktuellen Erwärmung, sodass insbesondere thermoplastische Bestandteile des Vliesstoffes aufgeschmolzen werden. Die aufgeschmolzenen Bestandteile von zu verbindenden Materialabschnitten fließen ineinander und sorgen nach deren Abkühlung für eine feste Verbindung.

So ist es möglich, bei der Herstellung von Windeln entsprechende Vliesstoffabschnitte zur Ausbildung einer Seitennaht miteinander zu verbinden.

In der Regel wird dem Gegenelement ein Bearbeitungselement an die Seite gestellt, so dass das zu bearbeitende Material, wie z.B. ein System aus mehreren Materialbahnen, in einem Spalt zwischen dem Gegenelement und dem Bearbeitungselement angeordnet oder hindurchbewegt werden kann, während mindestens von dem Gegenelement oder dem Bearbeitungselement eine Ultraschallschwingung auf das zu bearbeitende Material aufgebracht wird.

Dabei kann das Bearbeitungselement eine im Wesentlichen zylinderförmige oder zylindersegmentförmige Trägerfläche aufweisen, die dafür vorgesehen ist, während der Bearbeitung mit dem Material in Kontakt zu treten. Das Bearbeitungselement wird dann während der Bearbeitung um seine Längsachse gedreht, sodass die Trägerfläche auf dem zu bearbeitenden Material abrollt.

Dabei weist die Trägerfläche oft zumindest ein Strukturelement auf, welches in radialer Richtung über der Trägerfläche vorsteht, so dass das Strukturelement eine Oberseite aufweist, die dafür vorgesehen ist, mit dem zu bearbeitenden Material in Kontakt zu treten. Die eigentliche Verschweißung erfolgt dann in dem Bereich zwischen der Oberseite des Strukturelementes und einer Siegelfläche eines hierzu beabstandet angeordneten Gegenelementes.

Beispielsweise kann das Gegenelement eine Sonotrode und das Bearbeitungselement ein Amboss sein. Im Folgenden wird die Erfindung anhand dieses Beispiels erläutert, da dies die bevorzugte Ausführungsform ist. Prinzipiell ist es aber möglich, das Bearbeitungselement als Sonotrode und das Gegenelement als Amboss auszubilden.

Während der Bearbeitung rollt die Trägerfläche mit den Strukturelementen auf dem zu bearbeitenden Material ab, so dass insbesondere die Strukturelemente eine Verschweißung bewirken.

Die Verarbeitungsgeschwindigkeit ist mit den Vorrichtungen des Standes der Technik begrenzt.

Zwar lässt sich grundsätzlich die Vorschubgeschwindigkeit, d.h. die Geschwindigkeit, mit welcher das Material durch den Spalt zwischen Bearbeitungselement und Gegenelement bewegt wird, erhöhen.

Allerdings wird dann durch die Sonotrode, die mit einer festen Frequenz auf das Material einwirkt, nicht mehr genügend Energie in das Material einbringen, um eine zuverlässige Verschweißung zu ermöglichen. Dies liegt daran, dass bei einer höheren Vorschubgeschwindigkeit das Material kürzer mit der Siegelfläche der Sonotrode in Kontakt tritt und daher weniger "Schläge" von der Sonotrode auf das Material aufgebracht werden.

Dies kann teilweise dadurch kompensiert werden, dass die Kraft, mit welcher die Sonotrode auf das zu bearbeitende Material gedrückt wird, erhöht wird. Dadurch wird "pro Schlag" der Sonotrode mehr Energie in das Material übertragen. Dies sorgt allerdings für eine höhere Reibung und führt dazu, dass die aufgeschmolzenen Bestandteile, die sich durch die Ultraschallbearbeitung an den Grenzflächen zwischen den zu verschweißenden Materialschichten ausbilden. d. h. in der sogenannten Fügezone, durch die Strukturelemente aus der Fügezone gedrückt werden, was ebenfalls zu einer schlechteren Naht führt, da nicht mehr genug thermoplastische Bestandteile in der Fügezone zur Verfügung stehen. Alternativ oder in Kombination könnte auch die Schwingungsamplitude der Ultraschallschwingung erhöht werden. Auch hierdurch wird "pro Schlag" der Sonotrode mehr Energie in das Material übertragen. Diese ist jedoch nur begrenzt möglich. Wird die Sonotrode mit zu hoher Schwingungsamplitude betrieben, kann es zu Beschädigungen des Sonotrodenmaterials kommen.

Um eine höhere Verarbeitungsgeschwindigkeit zu erzielen, sind bereits sogenannte "welding wheels" verwendet worden, bei welchen mehrere Sonotroden auf einem Rad angeordnet sind, um die Kontaktzeit während der Drehbewegung des Rades zu erhöhen. Diese Lösung ist jedoch sehr aufwendig.

In der US 2010/243172 A1 wird beispielsweise eine Ultraschallbearbeitungsvorrichtung mit einer Sonotrode und einem Gegenwerkzeug beschrieben, wobei das Gegenwerkzeug einen erhabenen Abschnitt aufweist, wodurch ein Bearbeitungsspalt zwischen Sonotrode und Gegenwerkzeug verändert wird, wenn sich das Gegenwerkzeug relativ zu der Sonotrode dreht. Die Siegelfläche der Sonotrode hat zudem eine im Wesentlichen schraubenförmige Oberfläche, wodurch sich der Dichtungsspalt schraubenförmig entlang der Oberfläche bewegt, wenn sich der erhabene Teil des Gegenwerkzeuges an der Siegelfläche der Sonotrode vorbeidreht. Aus der EP 1 477 293 B1 wird ebenfalls eine Ultraschallbearbeitungsvorrichtung mit einer Sonotrode und einem Gegenwerkzeug beschrieben, wobei das Gegenwerkzeug eine Erhebung aufweist, deren Oberfläche gekrümmt sein kann. Der DE 2 154 057 ist eine Verfahren zum Lochen blattförmigen Guts zu entnehmen. Dort kommt ein Horn mit einer leicht gekrümmten Oberfläche und einer Abschrägung zum Einsatz.

Ausgehend von dem beschriebenen Stand der Technik ist es daher Aufgabe der vorliegenden Erfindung, ein Gegenelement anzugeben, mit welchem eine zuverlässige Verschweißung mit höherer Vorschubgeschwindigkeit ermöglicht wird.

Erfindungsgemäß wird diese Aufgabe mit einem Gegenelement nach Anspruch 1 gelöst.

Durch die abschnittsweise Krümmung des Schweißabschnittes verlängert sich die Kontaktzeit zwischen Gegenelement und Bearbeitungselement, sodass mehr Energie in das Material eingebracht werden kann, wodurch ebenfalls die Vorschubgeschwindigkeit erhöht werden kann, ohne dass die Kraft mit welcher die Sonotrode oder der Amboss auf das zu bearbeitende Material gedrückt wird, erhöht werden muss.

Erfindungsgemäß weist die Siegelfläche des Gegenelementes weiter einen Einlaufabschnitt auf, der neben dem Schweißabschnitt ange ordnet ist und entweder nicht gekrümmt ist, konvex gekrümmt ist oder mit einem Krümmungsradius konkav gekrümmt ist, welcher größer als der Krümmungsradius des Schweißabschnittes ist. Dadurch ändert sich am Übergang zwischen Einlaufabschnitt und Schweißabschnitt die Steigung oder die Krümmung der Siegelfläche, sodass bei der Verwendung eines Gegenelementes mit zylinderförmiger oder zylindersegmentförmiger Trägerfläche im Bereich des Einlaufabschnittes der Abstand zwischen Bearbeitungselement und Trägerfläche des Gegenelementes sukzessiv kleiner wird bis der kleinste Abstand erreicht wird, welcher dann dem Abstand zwischen Schweißabschnitt und Trägerfläche bzw. zwischen Schweißabschnitt und Oberseite des auf der Trägerfläche angeordneten Strukturelementes entspricht. Dieser Einlaufabschnitt ist derart angeordnet, dass ein in Vorschubrichtung durch den Spalt bewegtes Material zunächst mit dem Einlaufabschnitt und dann mit dem Schweißabschnitt in Kontakt kommt. In einer bevorzugten Ausführungsform ist der Einlaufabschnitt entweder nicht gekrümmt oder mit einem Krümmungsradius konkav gekrümmt ist, welcher größer als der Krümmungsradius des Schweißabschnittes ist.

In einer bevorzugten Ausführungsform ist der Einlaufabschnitt zwischen 0,2 mal und 5 mal so groß wie der Schweißabschnitt. Dabei ist es besonders bevorzugt, wenn der Einlaufabschnitt und der Schweißabschnitt in etwa gleich groß sind.

Die obengenannte Aufgabe wird auch gelöst durch eine Ultraschallschweißvorrichtung nach Anspruch 4.

Insbesondere dadurch, dass das oben genannte Gegenelement mit einem Bearbeitungselement mit im Wesentlichen zylinderförmigen oder zylindersegmentförmigen Trägerfläche zusammen arbeitet, wird die Zeitdauer, während der eine Ultraschallbearbeitung stattfindet, erhöht. In einer bevorzugten Ausführungsform ist die Trägerfläche zylinderförmig oder zylindersegmentförmig, wobei kleinere Abweichungen den erfindungsgemäßen Effekt nicht beeinträchtigen.

In einer besonders bevorzugten Ausführungsform ist die Ultraschallschweißvorrichtung derart ausgebildet und eingerichtet, dass eine Materialbahn oder mehrere Materialbahnen zwischen Bearbeitungselement und Gegenelement hindurch bewegt werden. Es kann eine Abzugswalze oder mehrere Abzugswalzen vorgesehen sein, auf denen die zu bearbeitenden Materialbahnen aufgewickelt sind und von denen das Material abgezogen und durch den Spalt zwischen Bearbeitungselement und Gegenelement hindurch bewegt werden. Es ist auch möglich eine Bahnführungswalze oder mehrere Bahnführungswalzen vorzusehen, welche die zu bearbeitenden Materialbahnen zwischen Bearbeitungselement und Gegenelement hindurch führen.

In einer weiteren bevorzugten Ausführungsform ist vorgesehen, dass auf der Trägerfläche zumindest ein Strukturelement angeordnet ist, welches in radialer Richtung über der im Wesentlichen zylinderförmigen oder zylindersegmentförmigen Trägerfläche vorsteht, wobei das Strukturelement eine Oberseite aufweist, die dafür vorgesehen ist, mit dem zu bearbeitenden Material in Kontakt zu treten, wobei die Oberseite einen Basisabschnitt und zumindest einen Ausnehmungsabschnitt aufweist, welcher einen geringeren Abstand von der Längsachse hat als der Basisabschnitt, wobei in einer Schnittansicht senkrecht zur Längsachse Basisabschnitt und Ausnehmungsabschnitt nebeneinander angeordnet sind.

Bei dem Abrollen des Strukturelementes auf dem Material können plastifizierte Bestandteile im Ausnehmungsabschnitt aufgenommen werden, so dass das beschriebene Herausdrücken der plastifizierten Bestandteile aus der Fügezone verringert wird.

In einer bevorzugten Ausführungsform erstreckt sich durch den Ausnehmungsabschnitt gebildete Ausnehmung nicht bis zur Trägerfläche, sondern hat vorzugsweise eine Tiefe von weniger als 1 mm und am besten zwischen 0,05 mm und 0,2 mm.

In einer weiteren bevorzugten Ausführungsform ist der Ausnehmungsabschnitt als Rille, welche möglichst nicht allein in Umfangsrichtung ausgerichtet ist, ausgebildet. Falls die Rille in Umfangsrichtung ausgerichtet ist, umläuft die Rille vorzugsweise die Trägerfläche nicht vollumfänglich, sondern erstreckt sich nur über einen Umfangswinkel < 360° und zwar am besten über einen Umfangswinkel von weniger als 45° und am besten von weniger als 25°. Es ist auch möglich, dass mehrere Rillen in Umfangsrichtung mit Abstand voneinander angeordnet sind.

Die Rille soll die Verschweißung nicht unterbrechen, sondern lediglich aufgeschmolzenes Material aufnehmen, sodass es im Wesentlichen an Ort und Stelle verbleibt und zur Verbindung der Materialschichten dienen kann.

Es hat sich gezeigt, dass diese Rille das nachteilige Delokalisieren der Schmelze aufgrund des erhöhten Druckes der Sonotrode auf das zu bearbeitende Material, an der Stelle der Rille stoppen kann. Die Schmelze wird dann nur bis zu der Rille bewegt. Die Rille dient somit als Aufnahme für das Schmelzematerial.

In einer bevorzugten Ausführungsform hat die Rille eine Breite, die kleiner als 1 mm ist und vorzugsweise kleiner als 0,6 mm ist. Am besten beträgt die Breite der Rille zwischen 0,2 und 0,4 mm.

In Abhängigkeit von dem zu verschweißenden Material kann es ausreichend sein, wenn die Rille eine Querschnittsfläche von weniger als 0,15 mm² hat. Vorzugsweise ist die Querschnittsfläche sogar geringer als 0,05 mm² und am besten liegt die Querschnittsfläche zwischen 0,015 mm² und 0,04 mm².

In einer bevorzugten Ausführungsform weist das Strukturelement eine Mehrzahl von Rillen, vorzugsweise mindestens drei Rillen, in der Oberseite auf, welche nicht in Umfangsrichtung ausgerichtet sind, wobei vorzugsweise die Rillen parallel zueinander angeordnet sind. Durch die Rillen gelingt es, aufgeschmolzenes Material an der jeweiligen Position zu halten, daher sind mehrere Rillen von Vorteil.

In einer weiteren bevorzugten Ausführungsform ist vorgesehen, dass die Oberseite des Strukturelementes einen Hauptabschnitt, der im Wesentlichen eben oder mit einer konvexen Krümmung mit einem Krümmungsradius, der dem Abstand des Hauptabschnittes von der Zylinderachse entspricht, ausgebildet ist, und mindestens einen sich an den Hauptabschnitt in Umfangsrichtung anschließenden Fasenabschnitt aufweist. Der Fasenabschnitt ist entweder gegenüber dem Hauptabschnitt abgewinkelt, sodass Haupt- und Fasenabschnitt einen Winkel kleiner als 180° einschließen, oder der Fasenabschnitt ist konvex gekrümmt, wobei, wenn der Hauptabschnitt konvex gekrümmt ausgebildet ist, der Krümmungsradius des Fasenabschnittes kleiner als der Krümmungsradius des Hauptabschnittes ist. Dabei ist vorzugsweise der mindestens eine Ausnehmungsabschnitt im Hauptabschnitt angeordnet ist. Der Fasenabschnitt dient dazu, das Material allmählich auf den schweißenden Kontakt zwischen dem Hauptabschnitt und dem Gegenelement vorzubereiten. Am Übergang zwischen Haupt- und Fasenabschnitt ändert sich die Steigung oder die Krümmung der Oberseite. Dadurch ist sichergestellt, dass bei der Verwendung des Bearbeitungselementes der Abstand zwischen Strukturelement und Gegenelement kontinuierlich kleiner wird, bis der kleinste Abstand zwischen Strukturelement und Gegenelement verwirklicht worden ist.

In einer weiteren bevorzugten Ausführungsform ist vorgesehen, dass die Oberseite zwei sich in Umfangsrichtung an gegenüberliegenden Seiten an den Hauptabschnitt anschließende Fasenabschnitte aufweist, die gegenüber dem Hauptabschnitt abgewinkelt sind, sodass Haupt- und Fasenabschnitt jeweils einen Winkel kleiner 180° einschließen. Bei der Bearbeitung hat somit die Oberseite des Strukturelementes nicht nur einen einlaufenden Fasenabschnitt, sondern zudem einen auslaufenden Fasenabschnitt, wodurch auch am Ende der Bearbeitung des Strukturelementes die vom Gegenelement auf das Bearbeitungselement aufgebrachte Kraft nur allmählich reduziert wird.

In einer weiteren bevorzugten Ausführungsform hat die Oberseite des Strukturelementes eine längliche Form mit einer Länge I und einer Breite b, wobei I > b ist. Dabei erstreckt sich die Länge vorzugsweise nicht parallel zur Längsachse, sondern am besten im Wesentlichen senkrecht hierzu.

In einer weiteren bevorzugten Ausführungsform ist vorgesehen, dass das Bearbeitungselement dafür vorgesehen ist, in einer Vorschubrichtung gedreht zu werden, in welcher ein zu bearbeitende Material zwischen Bearbeitungselement und Gegenelement hindurchbewegt wird, wobei Einlaufabschnitt und Schweißabschnitt derart angeordnet sind, dass ein in Vorschubrichtung durch den Spalt bewegtes Material zunächst mit dem Einlaufabschnitt und dann mit dem Schweißabschnitt in Kontakt kommt.

Wie bereits oben angemerkt kann das Gegenelement eine Sonotrode und das Bearbeitungselement ein Amboss sein.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren.

Es zeigen:
- Figur 1: eine Ultraschallschweißvorrichtung in einer perspektivischen Ansicht,
- Figur 2: eine Detailvergrößerung des mit X gekennzeichneten Bereiches von Figur 1,
- Figur 3: eine Detailvergrößerung von Figur 2,
- Figur 4: eine Seitenansicht der Ultraschallschweißvorrichtung von Figur 1 und
- Figur 5: eine vergrößerte Teilansicht von Figur 4.

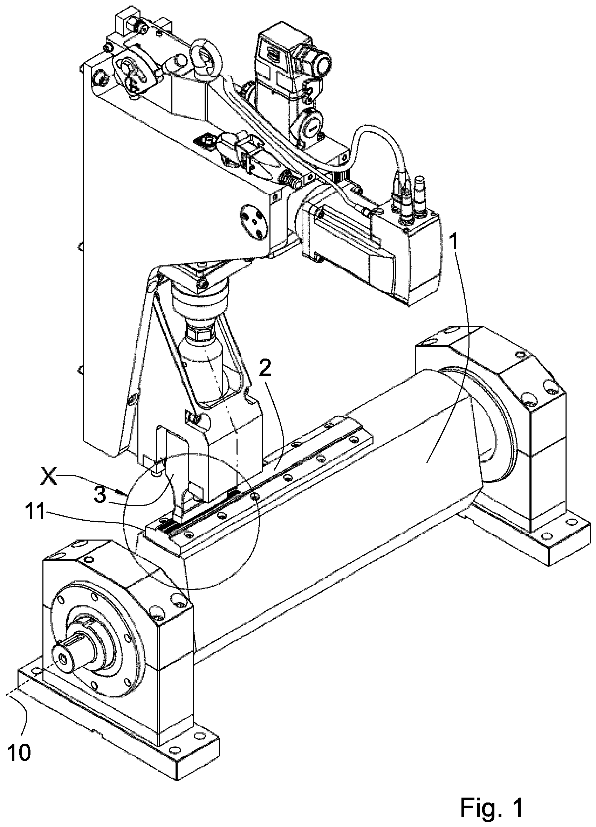

In Figur 1 ist eine perspektivische Ansicht einer Ultraschallschweißanlage gezeigt. Die Ultraschallschweißanlage weist ein als Amboss ausgebildetes Bearbeitungselement 1 auf, welches hier als Walze ausgeführt ist, die um eine Längsachse 10 drehbar ist. Auf der Walze ist mindestens eine Quernahtleiste 11 mit einer Trägerfläche 2 angeordnet. Gegenüberliegend ist ein als Sonotrode ausgebildetes Gegenelement 3 angeordnet.

Das Gegenelement 3 kann hier mit einer Ultraschallschwingung angeregt werden. Zu verarbeitendes Material wird dann zwischen der Trägerfläche 2 und der der Trägerfläche 2 zugewandten Siegelfläche der Sonotrode 3 hindurchbewegt, wobei die Bewegungsgeschwindigkeit des Materials mit der Umfangsgeschwindigkeit des Bearbeitungselementes 1 übereinstimmt. Dabei ist der Spalt zwischen Trägerfläche 2 und Sonotrode 3 so zu wählen, dass bei der Bearbeitung die Ultraschallschwingung auf das Material übertragen wird und es zu einem Aufschmelzen der thermoplastischen Bestandteile an den Grenzflächen kommt.

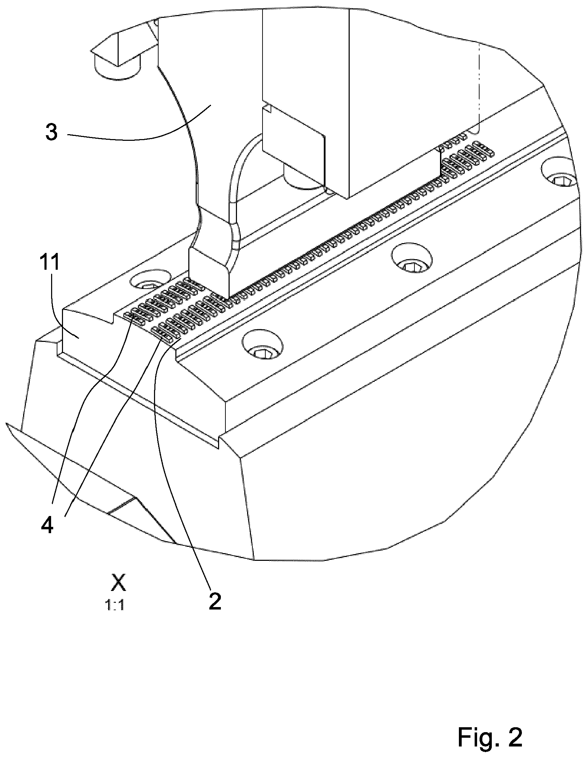

In Figur 2 ist eine Detailvergrößerung von Figur 1 gezeigt.

Man erkennt, dass auf der Trägerfläche 2 eine Vielzahl von Strukturelementen 4 angeordnet sind. Die Strukturelemente 4 haben eine längliche Form, die in Umfangsrichtung orientiert sind. Die Strukturelemente 4 treten bei der Bearbeitung mit dem Material in Kontakt und bestimmen das Schweißmuster, das bei der Bearbeitung in das Material eingebracht wird. Die Ultraschallschweißanlage kann beispielsweise zum Erstellen von Seitennähten von Windeln aus Vliesstoff verwendet werden.

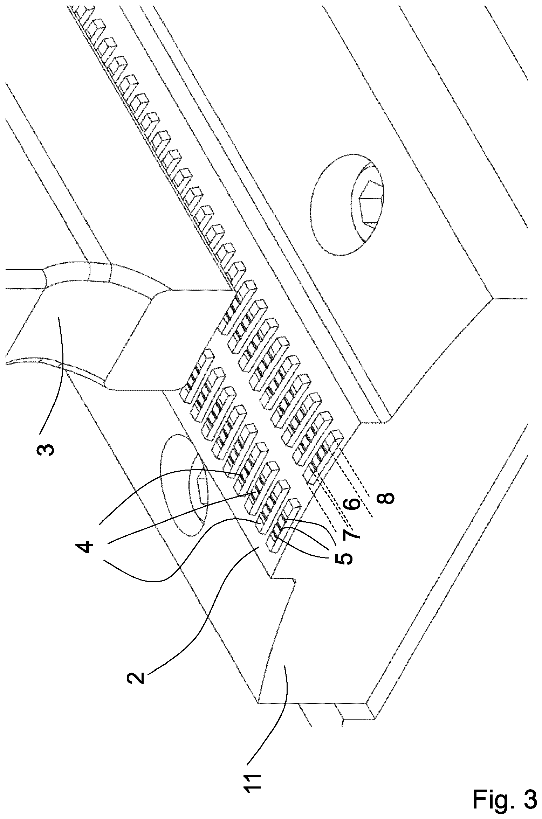

In Figur 3 ist eine Detailvergrößerung von Figur 2 dargestellt, in welcher die Strukturelemente 4 gut zu erkennen sind. In Umfangsrichtung (bezogen auf die Längsachse 10) sind zwei Strukturelemente 4 nebeneinander angeordnet. In axialer Richtung sind eine Vielzahl solcher Strukturelementpaare nebeneinander angeordnet.

Jedes Strukturelement weist einen Hauptabschnitt 6 auf sowie zwei Fasenabschnitte 7, 8, die gegenüber dem Hauptabschnitt 6 stärker gekrümmt sind. Im Hauptabschnitt 6 sind Rillen 5 eingebracht worden, die in der gezeigten Ausführungsform senkrecht zur Umfangsrichtung verlaufen. Es ist nicht notwendig, dass die Rillen senkrecht zur Umfangsrichtung verlaufen. Um den erfindungsgemäßen Effekt zu erzielen, sollten sie jedoch nicht parallel zur Umfangsrichtung angeordnet werden. Falls die Rillen doch parallel zur Umfangsrichtung angeordnet sind, sollten sie sich nicht über das gesamte Strukturelement 4 erstrecken.

Bei der schweißenden Bearbeitung rollen die Strukturelemente 4 auf dem zu bearbeitenden Material ab, sodass zunächst der Fasenabschnitt 8 mit dem zu bearbeitenden Material in Kontakt tritt. Aufgrund der abgewinkelten Anordnung des Fasenabschnittes 8 verringert sich in diesem Bereich der Abstand zwischen dem Strukturelement 4 und der gegenüber angeordneten Siegelfläche des Gegenelementes 3 sukzessive, bis der geringste Abstand im Bereich des Hauptabschnittes 6 erreicht wird. Der Hauptabschnitt 6 kann konvex gekrümmt ausgebildet sein, wobei der Krümmungsradius im Wesentlichen dem Abstand zwischen der Oberseite des Strukturelementes 4 und der Längsachse 10 des Bearbeitungselementes 1 entspricht.

In den Hauptabschnitt 6 sind die Rillen 5 mit einer Tiefe von 0,1 mm und einer Breite von 0,3 mm eingebracht worden. In die sich dadurch ergebenden Ausnehmungen kann geschmolzenes Material eindringen, sodass es im Wesentlichen an Ort und Stelle verbleibt und durch die Strukturelemente nicht aus der Fügezone gequetscht wird.

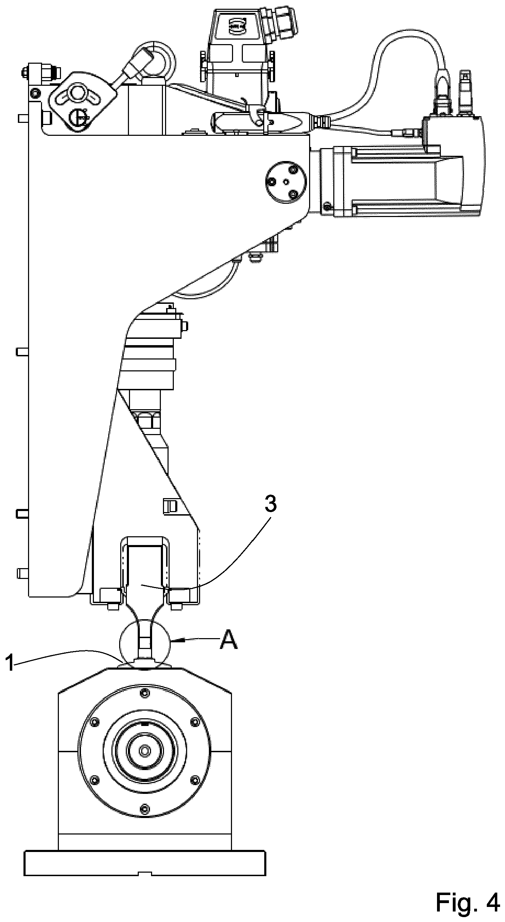

In Figur 4 ist eine Seitenansicht auf die Ultraschallschweißvorrichtung von Figur 1 gezeigt. Die Siegelfläche, d.h. die Fläche, die der Trägerfläche bzw. den Strukturelementen 4 zugewandt ist, ist die Fläche 9.

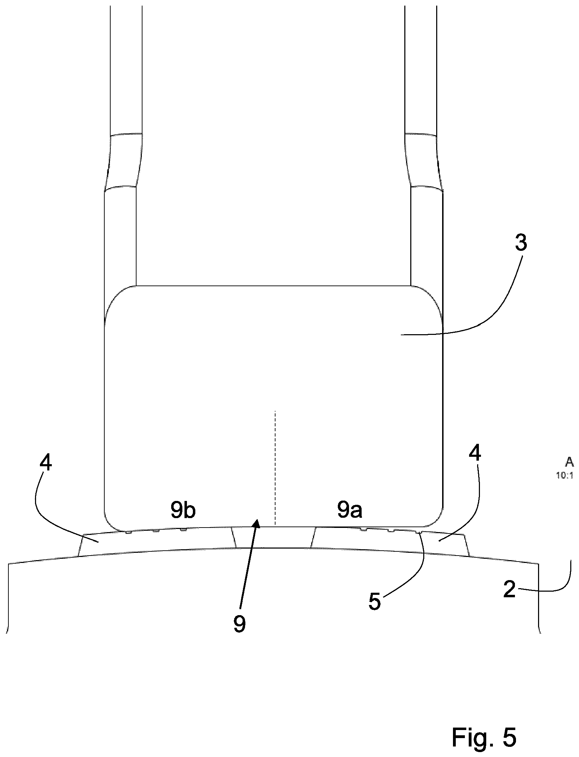

In Figur 5 ist eine vergrößerte Teilansicht der Figur 4 dargestellt. Die Fläche 9 besteht hier aus einem Einlaufabschnitt 9a und einem Schweißabschnitt 9b. Der Schweißabschnitt 9b ist konkav gekrümmt und zwar im Wesentlichen mit dem gleichen Krümmungsradius wie der Krümmungsradius des Hauptabschnittes des Bearbeitungselementes. Durch diese Maßnahme wird sichergestellt, dass während der Bearbeitung das Material länger mit der Sonotrode in Kontakt bleibt, sodass mehr Energie in das zu bearbeitende Material eingebracht werden kann. Der Einlaufabschnitt 9a ist in dieser Ausführungsform nicht gekrümmt ausgebildet und stellt dadurch sicher, dass das zu bearbeitende Material im Bereich des Einlaufabschnittes 9a zunächst in einen enger werdenden Spalt geführt wird. Schweißabschnitt und Einlaufabschnitt sind in etwa gleich groß. Im Bereich des Schweißabschnittes 9b ist der Spalt dann minimal und wird im Bereich des Schweißabschnittes im Wesentlichen konstant gehalten. Dabei erfolgt die Verschweißung hauptsächlich durch den Schweißabschnitt 9b, der Einlaufabschnitt 9a kann aber an seinem dem Schweißabschnitt 9b zugewandten Ende bereits zur Verschwei-ßung beitragen.

Die gestrichelte Linie zeigt die Grenze zwischen Einlaufabschnitt 9a und Schweißabschnitt 9b. Diese Grenze ist in der gezeigten Ausführungsform in der Mitte der Siegelfläche 9 angeordnet, so dass Einlaufabschnitt 9a und Schweißabschnitt 9 b gleich groß sind. Die Grenze sollte möglichst derart angeordnet sein, dass der Schweißabschnitt zwischen 20% und 80% und vorzugsweise zwischen 30% und 70% der Fläche 9 einnimmt.

### Bezugszeichenliste

- 1: Bearbeitungselement (Amboss)
- 2: Trägerfläche
- 3: Gegenelement (Sonotrode)
- 4: Strukturelemente
- 5: Rillen
- 6: Hauptabschnitt
- 7,8: Fasenabschnitte
- 9: Siegelfläche
- 9a: Einlaufabschnitt
- 9b: Schweißabschnitt
- 10: Längsachse
- 11: Quernahtleiste

## Patentansprüche

1. Gegenelement (3) für die Bearbeitung eines Materials mittels Ultraschall, wobei das Gegenelement (3) eine Siegelfläche (9) aufweist, die Siegelfläche (9) einen Schweißabschnitt (9b) aufweist, der zumindest abschnittweise konkav gekrümmt ist, **dadurch gekennzeichnet, dass** die Siegelfläche (9) einen Einlaufabschnitt (9a) aufweist, der neben dem Schweißabschnitt (9b) angeordnet ist, und entweder konvex gekrümmt ist oder mit einem Krümmungsradius konkav gekrümmt ist, welcher größer als der Krümmungsradius des Schweißabschnittes ist.

2. Gegenelement (3) nach Anspruch 1, **dadurch gekennzeichnet, dass** der Einlaufabschnitt (9a) und der Schweißabschnitt (9b) in etwa gleich groß sind.

3. Gegenelement (3) nach einem der Ansprüche 1 bis 2, **dadurch gekennzeichnet, dass** das Gegenelement (3) eine Sonotrode ist.

4. Ultraschallschweißvorrichtung mit einem Gegenelement (3) nach einem der vorherigen Ansprüche und einem Bearbeitungselement (1), wobei das Bearbeitungselement (1) eine im Wesentlichen zylinderförmige oder zylindersegmentförmige Trägerfläche (2) aufweist, die dafür vorgesehen ist, während der Bearbeitung mit dem Material in Kontakt zu treten, wobei das Bearbeitungselement (1) dafür vorgesehen ist, während der Bearbeitung um seine Längsachse (10) gedreht zu werden, sodass die Trägerfläche (2) sich in einer Umfangsrichtung bewegt und auf dem zu bearbeitenden Material abrollt, wobei die Siegelfläche (9) des Gegenelementes (3) gegenüberliegend zu dem Bearbeitungselement (1) angeordnet werden kann, so dass sich zwischen der Trägerfläche (2) und der Siegelfläche (9) ein Spalt bildet, in welchem ein zu bearbeitendes Material angeordnet werden kann, wobei der Schweißabschnitt (9b) in einer Schnittansicht senkrecht zur Längsachse (10) des Bearbeitungselement (1) zumindest abschnittweise konkav gekrümmt ist.

5. Ultraschallschweißvorrichtung nach Anspruch 4, **dadurch gekennzeichnet, dass** auf der Trägerfläche (2) zumindest ein Strukturelement (4) angeordnet ist, welches in radialer Richtung über der im Wesentlichen zylinderförmigen oder zylindersegmentförmigen Trägerfläche (2) vorsteht, wobei das Strukturelement (4) eine Oberseite aufweist, die dafür vorgesehen ist, mit dem zu bearbeitenden Material in Kontakt zu treten, wobei die Oberseite einen Basisabschnitt und zumindest einen Ausnehmungsabschnitt aufweist, welcher einen geringeren Abstand von der Längsachse (10) hat als der Basisabschnitt, wobei in einer Schnittansicht senkrecht zur Längsachse (10) Basisabschnitt und Ausnehmungsabschnitt nebeneinander angeordnet sind, wobei vorzugsweise die durch den Ausnehmungsabschnitt gebildete Ausnehmung sich nicht bis zur Trägerfläche (2) erstreckt, wobei vorzugsweise die Ausnehmung eine Tiefe von weniger als 1 mm und besonders bevorzugt zwischen 0,05mm und 0,2mm hat.

6. Ultraschallschweißvorrichtung nach Anspruch 5, **dadurch gekennzeichnet, dass** der Ausnehmungsabschnitt als Rille (5) ausgebildet ist, wobei vorzugsweise die Rille (5) nicht in Umfangsrichtung ausgerichtet ist und/oder die Rille (5) eine Breite hat, die kleiner als 1 mm ist und vorzugsweise kleiner als 0,6mm ist und besonders bevorzugt zwischen 0,2 mm und 0,4 mm beträgt.

7. Ultraschallschweißvorrichtung nach Anspruch 6, **dadurch gekennzeichnet, dass** die Rille (5) eine Querschnittsfläche von weniger als 0,15 mm² hat, vorzugsweise von weniger als 0,05 mm² hat und besonders bevorzugt die Querschnittsfläche zwischen 0,015 mm² und 0,04 mm² beträgt.

8. Ultraschallschweißvorrichtung nach einem Ansprüche 6 bis 7, **dadurch gekennzeichnet, dass** das Strukturelement (4) eine Mehrzahl von Rillen (5), vorzugsweise mindestens drei Rillen (5), in der Oberseite aufweist, welche nicht in Umfangsrichtung ausgerichtet sind, wobei vorzugsweise die Rillen (5) parallel zueinander angeordnet sind.

9. Ultraschallschweißvorrichtung nach einem Ansprüche 4 bis 8, **dadurch gekennzeichnet, dass** die Oberseite einen Hauptabschnitt (6), der im Wesentlichen eben oder mit einer konvexen Krümmung mit einem Krümmungsradius, der dem Abstand des Hauptabschnittes (6) von der Zylinderachse entspricht, ausgebildet ist, und mindestens einen sich an den Hauptabschnitt (6) in Umfangsrichtung anschließenden Fasenabschnitt (7, 8) aufweist, der entweder gegenüber dem Hauptabschnitt (6) abgewinkelt ist, so dass Haupt (6)- und Fasenabschnitt (7, 8)einen Winkel < 180° einschließen, und/oder konvex gekrümmt ist, wobei, wenn der Hauptabschnitt (6) konvex gekrümmt ausgebildet ist, der Krümmungsradius des Fasenabschnittes (7, 8) kleiner als der Krümmungsradius des Hauptabschnittes (6) ist, wobei vorzugsweise der mindestens eine Ausnehmungsabschnitt im Hauptabschnitt (6) angeordnet ist.

10. Ultraschallschweißvorrichtung nach Anspruch 9, **dadurch gekennzeichnet, dass** der Hauptabschnitt (6) des Bearbeitungselement (1) mit einem Krümmungsradius konvex gekrümmt ist, welcher in etwa dem Krümmungsradius des konkav gekrümmten Abschnittes des Gegenelementes (3) entspricht.

11. Ultraschallschweißvorrichtung nach einem der Ansprüche 4 bis 10, **dadurch gekennzeichnet, dass** mindestens zwei in Umfangsrichtung voneinander beabstandete Strukturelemente (4) vorgesehen sind und/oder das Bearbeitungselement (1) als Amboss ausgebildet ist und/oder die Oberseite eine längliche Form mit einer Länge I und einer Breite b hat, wobei I>b ist.

12. Ultraschallschweißvorrichtung nach einem der Ansprüche 4 bis 11, **dadurch gekennzeichnet, dass** das Bearbeitungselement (1) dafür vorgesehen ist, in einer Vorschubrichtung gedreht zu werden, in welcher ein zu bearbeitende Material zwischen Bearbeitungselement (1) und Gegenelement (3) hindurchbewegt wird, wobei Einlaufabschnitt (9a) und Schweißabschnitt (9b) derart angeordnet sind, dass ein in Vorschubrichtung durch den Spalt bewegtes Material zunächst mit dem Einlaufabschnitt (9a) und dann mit dem Schweißabschnitt (9b) in Kontakt kommt.

13. Ultraschallschweißvorrichtung nach einem der Ansprüche 4 bis 12, **dadurch gekennzeichnet, dass** zumindest eine Abzugswalze, auf welcher eine zu bearbeitende Materialbahn aufgewickelt ist, und/oder zumindest eine Bahnführungswalze, welche eine zu bearbeitende Materialbahn führt, vorgesehen ist, wobei Abzugswalzen und/oder Bahnführungswalzen derart angeordnet sind, dass ein oder mehrere Materialbahnen zwischen Bearbeitungselement (1) und Gegenelement (3) hindurchbewegt werden können.

## Claims

1. Counter-element (3) for processing a material by means of ultrasound, the counter-element (3) having a sealing surface (9), the sealing surface (9) having a welding portion (9b) which is at least partially concavely curved, **characterised in that** the sealing surface (9) comprises a feed-in portion (9a) which is arranged adjoining the welding portion (9b) and is either convexly curved, or is concavely curved with a radius of curvature that is larger than the radius of curvature of the welding portion.

2. Counter-element (3) according to claim 1, **characterised in that** the feed-in portion (9a) and the welding portion (9b) are approximately equal in size.

3. Counter-element (3) according to any of claims 1 to 2, **characterised in that** the counter-element (3) is a sonotrode.

4. Ultrasonic welding apparatus having a counter-element (3) according to one of the preceding claims and a processing element (1), wherein the processing element (1) has a substantially cylindrical or cylindrical segment-shaped support surface (2), which is intended to come into contact with the material during the processing, wherein the processing element (1) is intended to be rotated about its longitudinal axis (10) during the processing, such that the support surface (2) moves in a circumferential direction and rolls over the material to be processed, wherein the sealing surface (9) of the counter-element (3) is able to be arranged opposite to the processing element (1), such that a gap forms between the support surface (2) and the sealing surface (9), in which a material to be processed is able to be arranged, wherein in a sectional view perpendicular to the longitudinal axis (10) of the processing element (1), the welding portion (9b) is at least partially concavely curved.

5. Ultrasonic welding apparatus according to claim 4, **characterised in that** arranged on the support surface (2) is at least one structural element (4) which protrudes radially above the substantially cylindrical or cylindrical segment-shaped support surface (2), wherein the structural element (4) has an upper side, which is intended to come into contact with the material to be processed, wherein the upper side comprises a base portion and at least one recess portion which has a smaller spacing from the longitudinal axis (10) than the base portion, wherein in a sectional view perpendicular to the longitudinal axis (10), the base portion and the recess portion are arranged adjoining one another, wherein preferably the recess formed by the recess portion does not extend to the support surface (2), wherein preferably the recess has a depth of less than 1 mm, and particularly preferably between 0.05 mm and 0.2 mm.

6. Ultrasonic welding apparatus according to claim 5, **characterised in that** the recess portion is configured as a groove (5), wherein preferably the groove (5) is not oriented in the circumferential direction and/or the groove (5) has a width that is less than 1 mm and preferably less than 0.6 mm, and particularly preferably is between 0.2 mm and 0.4 mm.

7. Ultrasonic welding apparatus according to claim 6, **characterised in that** the groove (5) has a cross-sectional area of less than 0.15 mm², preferably less than 0.05 mm², and particularly preferably the cross-sectional area is between 0.015 mm² and 0.04 mm².

8. Ultrasonic welding apparatus according to any of claims 6 to 7, **characterised in that** the structural element (4) has a plurality of grooves (5), preferably at least three grooves (5), in the upper side, which are not oriented in the circumferential direction, wherein preferably the grooves (5) are arranged parallel to one another.

9. Ultrasonic welding apparatus according to any of claims 4 to 8, **characterised in that** the upper side has a main portion (6), which is configured substantially planar or having a convex curvature with a radius of curvature which corresponds to the spacing of the main portion (6) from the cylinder axis, and has at least one bevel portion (7, 8) which adjoins the main portion (6) in the circumferential direction and which is either angled relative to the main portion (6), such that main portion (6) and the bevel portion (7, 8) enclose an angle of < 180°, and/or is convexly curved, wherein, if the main portion (6) is formed convexly curved, the radius of curvature of the bevel portion (7, 8) is less than the radius of curvature of the main portion (6), wherein preferably the at least one recess portion is arranged in the main portion (6).

10. Ultrasonic welding apparatus according to claim 9, **characterised in that** the main portion (6) of the processing element (1) is convexly curved with a radius of curvature that approximately corresponds to the radius of curvature of the concavely curved portion of the counter-element (3).

11. Ultrasonic welding apparatus according to any of claims 4 to 10, **characterised in that** at least two structural elements (4) are provided which are spaced from one another in the circumferential direction and/or the processing element (1) is configured as an anvil and/or the upper side has an elongate form having a length I and a width b, wherein I>b.

12. Ultrasonic welding apparatus according to any of claims 4 to 11, **characterised in that** the processing element (1) is intended to be rotated in a feed direction, in which a material to be processed is moved between the processing element (1) and the counter-element (3), wherein the feed-in portion (9a) and the welding portion (9b) are arranged in such a way that a material moved in the feed direction through the gap initially comes into contact with the feed-in portion (9a) and then with the welding portion (9b).

13. Ultrasonic welding apparatus according to any of claims 4 to 12, **characterised in that** at least one take-off roller on which a web of material to be processed is wound and/or at least one web guide roller which guides a web of material to be processed is provided, wherein take-off rollers and/or web guide rollers are arranged such that one or more webs of material can be moved between the processing element (1) and the counter-element (3).

## Revendications

1. Contre-élément (3) pour l'usinage d'un matériau au moyen d'ultrasons, le contre-élément (3) comprenant une surface de scellement (9), la surface de scellement (9) comprenant une partie de soudage (9b) qui est au moins en partie courbée de manière concave, **caractérisé en ce que** la surface de scellement (9) comprend une partie d'entrée (9a) qui est agencée à côté de la partie de soudage (9b) et qui est soit courbée de manière convexe, soit courbée de manière concave avec un rayon de courbure qui est plus grand que le rayon de courbure de la partie de soudage.

2. Contre-élément (3) selon la revendication 1, **caractérisé en ce que** la partie d'entrée (9a) et la partie de soudage (9b) sont approximativement de la même taille.

3. Contre-élément (3) selon l'une des revendications 1 à 2, **caractérisé en ce que** le contre-élément (3) est une sonotrode.

4. Dispositif de soudage par ultrasons comprenant un contre-élément (3) selon l'une quelconque des revendications précédentes et un élément d'usinage (1), l'élément d'usinage (1) comprenant une surface de support (2) sensiblement cylindrique ou en forme de segment de cylindre, qui est prévue pour venir en contact avec le matériau pendant l'usinage, l'élément d'usinage (1) étant prévu pour être tourné autour de son axe longitudinal (10) pendant l'usinage, de sorte que la surface de support (2) se déplace dans une direction circonférentielle et déroule sur le matériau à usiner, la surface de scellement (9) du contre-élément (3) pouvant être agencée enface de l'élément d'usinage (1), de sorte qu'un espace se forme entre la surface de support (2) et la surface de scellement (9) dans lequel un matériau à usiner peut être agencé, la partie de soudage (9b) étant courbée au moins en partie de manière concave dans une vue en coupe perpendiculaire à l'axe longitudinal (10) de l'élément d'usinage (1).

5. Dispositif de soudage par ultrasons selon la revendication 4, **caractérisé en ce qu'**au moins un élément de structure (4) est agencé sur la surface de support (2), qui fait saillie dans la direction radiale au-dessus de la surface de support (2) sensiblement cylindrique ou en forme de segment de cylindre, l'élément de structure (4) comprenant une face supérieure qui est prévue pour venir en contact avec le matériau à usiner, la face supérieure comprenant une partie de base et au moins une partie d'évidement qui est située à une distance plus faible de l'axe longitudinal (10) que la partie de base, dans une vue en coupe perpendiculaire à l'axe longitudinal (10), la partie de base et la partie d'évidement étant agencées l'une à côté de l'autre, de préférence l'évidement formé par la partie d'évidement ne s'étendant pas jusqu'à la surface de support (2), de préférence l'évidement comprenant une profondeur de moins de 1 mm, et de manière particulièrement préférée comprise entre 0,05 mm et 0,2 mm.

6. Dispositif de soudage par ultrasons selon la revendication 5, **caractérisé en ce que** la partie d'évidement est réalisée sous la forme d'une rainure (5), la rainure (5) n'étant de préférence pas orientée dans la direction circonférentielle et/ou la rainure (5) ayant une largeur inférieure à 1 mm et de préférence inférieure à 0,6 mm, et de manière particulièrement préférée comprise entre 0,2 mm et 0,4 mm.

7. Dispositif de soudage par ultrasons selon la revendication 6, **caractérisé en ce que** la rainure (5) comprend une surface de section transversale inférieure à 0,15 mm², de préférence inférieure à 0,05 mm² et de manière particulièrement préférée, la surface de section transversale est comprise entre 0,015 mm² et 0,04 mm².

8. Dispositif de soudage par ultrasons selon l'une quelconque des revendications 6 à 7, **caractérisé en ce que** l'élément de structure (4) comprend une pluralité de rainures (5), de préférence au moins trois rainures (5), dans la surface supérieure, qui ne sont pas orientées dans la direction circonférentielle, les rainures (5) étant de préférence agencées parallèlement les unes aux autres.

9. Dispositif de soudage par ultrasons selon l'une quelconque des revendications 4 à 8, **caractérisé en ce que** la surface supérieure comprend une partie principale (6) qui est réalisée sensiblement plane ou avec une courbure convexe ayant un rayon de courbure qui correspond à la distance de la partie principale (6) par rapport à l'axe de cylindre, et au moins une partie de chanfrein (7, 8) adjacente à la partie principale (6) dans la direction circonférentielle et qui est soit coudée par rapport à la partie principale (6), de sorte que la partie principale (6) et la partie de chanfrein (7, 8) forment un angle < 180°, et/ou est courbée de manière convexe, lorsque la partie principale (6) est réalisée courbée de manière convexe, le rayon de courbure de la partie de chanfrein (7, 8) étant inférieur au rayon de courbure de la partie principale (6), de préférence ladite au moins une partie d'évidement étant agencée dans la partie principale (6).

10. Dispositif de soudage par ultrasons selon la revendication 9, **caractérisé en ce que** la partie principale (6) de l'élément d'usinage (1) est courbée de manière convexe avec un rayon de courbure qui correspond approximativement au rayon de courbure de la partie courbée de manière concave du contre-élément (3).

11. Dispositif de soudage par ultrasons selon l'une quelconque des revendications 4 à 10, **caractérisé en ce qu'**au moins deux éléments de structure (4) espacés l'un de l'autre dans la direction circonférentielle sont prévus et/ou l'élément d'usinage (1) est réalisé sous la forme d'une enclume et/ou la surface supérieure comprend une forme allongée avec une longueur 1 et une largeur b, avec l>b.

12. Dispositif de soudage par ultrasons selon l'une quelconque des revendications 4 à 11, **caractérisé en ce que** l'élément d'usinage (1) est prévu pour être tourné dans une direction d'avancée dans laquelle un matériau à usiner est déplacé entre l'élément d'usinage (1) et le contre-élément (3), la partie d'entrée (9a) et la partie de soudage (9b) étant agencées de telle sorte qu'un matériau déplacé dans la direction d'avancée dans l'espace vienne en contact d'abord avec la partie d'entrée (9a), puis avec la partie de soudage (9b).

13. Dispositif de soudage par ultrasons selon l'une quelconque des revendications 4 à 12, **caractérisé en ce qu'**au moins un rouleau d'extraction sur lequel une bande de matériau à usiner est enroulée et/ou au moins un rouleau de guidage de bande qui guide une bande de matériau à usiner sont prévus, des rouleaux d'extraction et/ou des rouleaux de guidage de bande étant agencés de telle sorte qu'une ou plusieurs bandes de matériau puissent être déplacées entre l'élément d'usinage (1) et le contre-élément (3).
